# EUROPEAN PATENT SPECIFICATION

(11) **EP 2 690 235 B1**
(45) Date of publication and mention of the grant of the patent: **12.09.2018**
(21) Application number: 12177835.1
(22) Date of filing: 25.07.2012
(51) Int. Cl.: E04G 25/06, B60P 7/15, B66F 1/06

(54) **AUTOMATICALLY EXTENSIBLE TELESCOPIC APPARATUS**
AUTOMATISCH ERWEITERBARE TELESKOPISCHE VORRICHTUNG
APPAREIL TÉLESCOPIQUE EXTENSIBLE AUTOMATIQUEMENT

(43) Date of publication of application: 29.01.2014
(73) Proprietor: Huang, Han-Ching, Situn, Taichung City 407 (TW)
(72) Inventor: Huang, Han-Ching, Situn, Taichung City 407 (TW)
(74) Representative: Lang, Christian

(56) References cited:
- US-A1- 2011 163 216
- US-A1- 2011 179 609
- US-A1- 2012 104 192

## Description

### BACKGROUND OF INVENTION

### 1. FIELD OF INVENTION

The present invention relates to a telescopic apparatus and, more particularly, to an automatically extensible telescopic apparatus

### 2. RELATED PRIOR ART

A conventional telescopic apparatus is disclosed by US 2012/104192 A1. Said conventional telescopic apparatus includes a tube inserted in another tube telescopically, a positioning unit operable for moving and positioning the tubes relative to each other, and two contact units each connected to a respective one of the tubes. The conventional telescopic apparatus is extensible by operating the positioning unit or pulling the tubes from each other. A similar telescopic apparatus, which includes in addition an intermediate tube, is described by US 2011/163216 A1. Either way, the extension of the conventional telescopic apparatuses is manual.

The present invention is therefore intended to obviate or at least alleviate the problems encountered in prior art.

US 2011/179609 A1 relates to a strap-tightening device including a ratchet for reeling in a strap.

### SUMMARY OF INVENTION

It is the primary objective of the present invention to provide a mechanical telescopic apparatus, which can be extended in a controllable self-acting way.

The above mentioned object is solved by the automatic extensible telescopic apparatus according to claim 1. Advantageous improvements of the invention are described by the dependent claims.

To achieve the foregoing objective, the telescopic apparatus includes an internal tube inserted in an external tube, a positioning unit, a handle, and an extending unit. The positioning unit includes a ferrule, two fins, an axle, a toothed wheel and a first detent. The ferrule is provided on the external tube. The fins extend from the ferrule. The axle is supported on the fins. The toothed wheel is supported on the axle and includes teeth for insertion in recesses defined in the internal tube. The first detent is supported on the fins for engagement with the toothed wheel. The handle includes two leaves and a second detent. The leaves are placed between the fins and supported on the axle. The second detent is supported on the leaves for engagement with the toothed wheel. The extending unit is connected to the axle so that the extending unit can rotate the toothed wheel via the axle, thus extending the internal tube from the external tube.

In another aspect, the automatic extensible telescopic apparatus includes an internal tube inserted in an intermediate tube inserted in an external tube. The external tube includes apertures defined therein. The intermediate tube includes an aperture defined therein. The internal tube includes recesses defined therein. An elastic lock includes a leaf spring and a boss formed on the leaf spring. The leaf spring is placed in the intermediate tube. The boss can be inserted in one of the apertures of the external tube via the aperture of the intermediate tube. A positioning unit includes a ferrule provided on the intermediate tube, two fins formed on the ferrule, an axle rotationally supported on the fins, a toothed wheel supported on the axle and formed with teeth for insertion in the recesses, and a first detent movably supported on the fins for engagement with the toothed wheel. A handle includes two leaves placed between the fins and supported on the axle and a second detent movably supported on the leaves for engagement with the toothed wheel. An extending unit is connected to the axle so that the extending unit rotates the toothed wheel via the axle, thus extending the internal tube from the intermediate tube.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a perspective view of an automatically extensible telescopic apparatus according to the first embodiment of the present invention;
FIG. 2 is an exploded view of the automatically extensible telescopic apparatus shown in FIG. 1;
FIG. 3 is an exploded view of a positioning unit and an extending unit of the automatically extensible telescopic apparatus shown in FIG. 1;
FIG. 4 is a cross-sectional view of the automatically extensible telescopic apparatus shown in FIG. 1;
FIG. 5 is another cross-sectional view of the automatically extensible telescopic apparatus shown in FIG. 1;
FIG. 6 is a cross-sectional view of the automatically extensible telescopic apparatus in another position than shown in FIG. 4;
FIG. 7 is a cross-sectional view of the automatically extensible telescopic apparatus in another position than shown in FIG. 6;
FIG. 8 is an enlarged, partial, cross-sectional view of the automatically extensible telescopic apparatus in another position than shown in FIG. 7;
FIG. 9 is a cross-sectional view of the automatically extensible telescopic apparatus shown in FIG. 8;
FIG. 10 is a cross-sectional view of the automatically extensible telescopic apparatus in another position than shown in FIG. 8; and
FIG. 11 is an exploded view of an automatically extensible telescopic apparatus according to the second embodiment of the present invention.

### DETAILED DESCRIPTION OF EMBODIMENTS

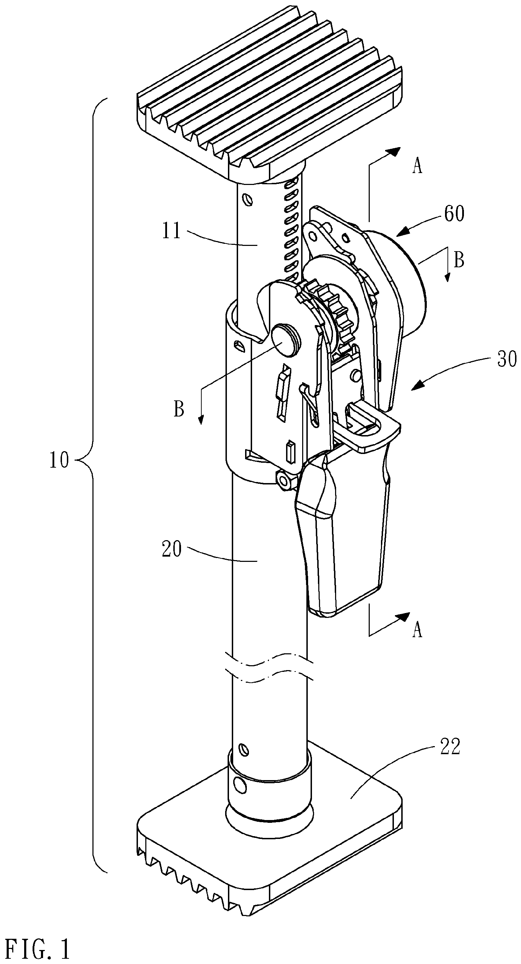

Referring to FIG. 1, an automatically extensible telescopic apparatus 10 includes an internal tube 11 telescopically inserted in an external tube 20, a positioning unit 30 operable for moving and positioning the tubes 11 and 20 relative to each other, and an extending unit 60 for moving the tubes 11 and 20 from each other according to a first embodiment of the present invention.

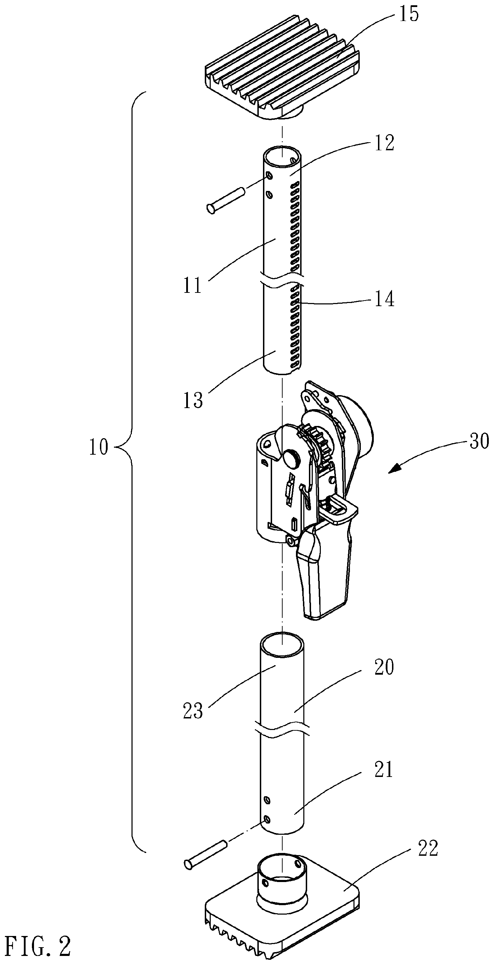

Referring to FIG. 2, the internal tube 11 includes two ends 12 and 13 and recesses 14 defined therein between the ends 12 and 13. The recesses 14 may be grooves or slots. A contact element 15 is pivotally connected to the end 12 of the internal tube 11.

The external tube 20 includes two ends 21 and 23. A contact element 22 is pivotally connected to the end 21 of the external tube 20.

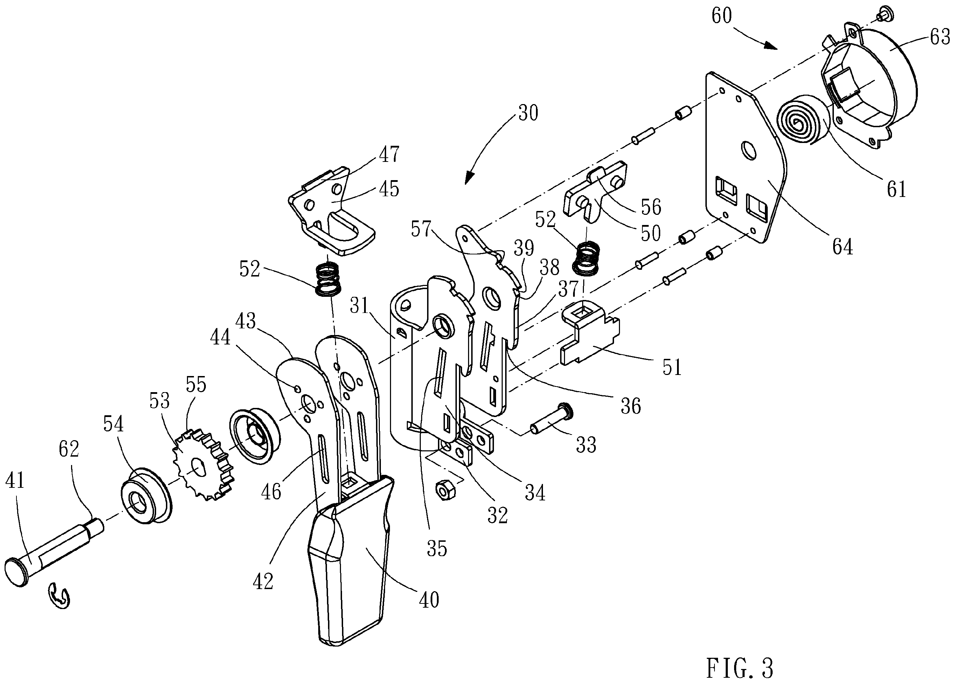

Referring to FIG. 3, the positioning unit 30 includes a ferrule 31, a handle 40, two detents 45 and 50 and a toothed wheel 53. The ferrule 31 includes a semi-tubular body, two tabs 32 extending from two edges of the semi-tubular body, and two fins 34 extending from the edges of the semi-tubular body. Each fin 34 includes a slot 35 defined therein and an edge formed with five portions 36, 37, 38, 39 and 57. There is a peak formed between the portions 38 and 39 of the edge of each fin 34.

The handle 40 includes two leaves 42 each including a slot 46 defined therein, a cam 43 formed at an end, and three bosses 44 formed on a side of the cam 43. An axle 41 is provided with a slit 62 defined in an end.

The toothed wheel 53 includes teeth 55 formed on the periphery. There are provided two spacers 54 for positioning the toothed wheel 53 axially. The spacers 54 are in the shape of a cap.

The detent 50 includes a tongue 56 extending from a front edge, two wings extending from two lateral edges, and a tail extending from a rear edge. The tongue 56 is in the form of a ratchet. A supporting element 51 is provided with a frame perpendicularly extending from a front edge and two wings extending from two lateral edges. There is provided a first helical spring 52 for biasing the detent 50.

The detent 45 includes a tongue 47 extending from a front edge, two wings extending from two lateral edges, and a tail extending from a rear edge. The tongue 47 is in the form of a ratchet. There is provided a second helical spring 52 for biasing the detent 45.

The extending unit 60 includes a coil spring 61, a shell 63 and a plate 64. The coil spring 61 is placed in the shell 63. The shell 63 is attached to the plate 64 by welding or fasteners such as screws and rivets. Thus, the coil spring 61 is hidden by the shell 63 and the plate 64.

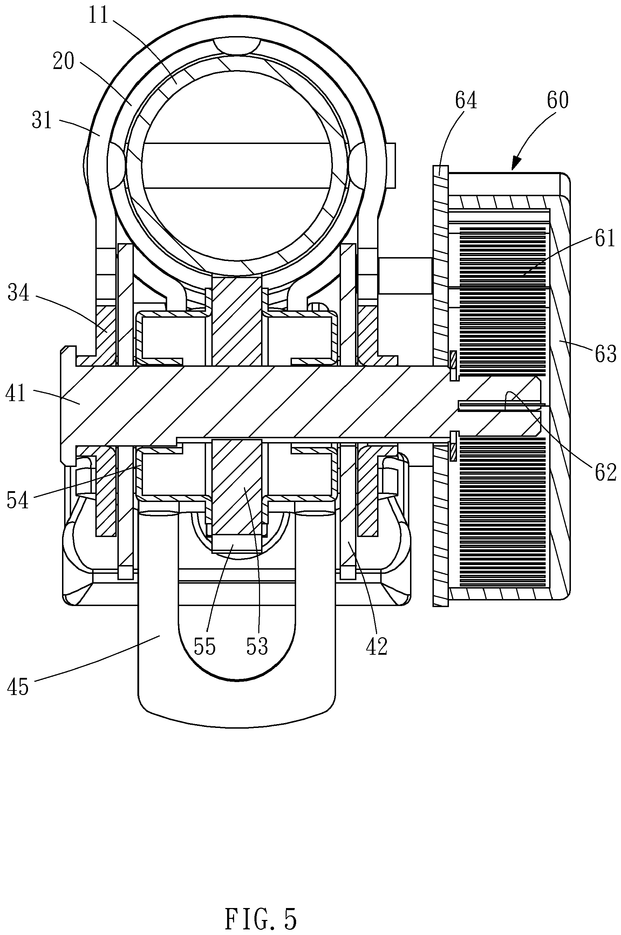

Referring to FIGS. 3 to 5, each wing of the supporting element 51 is inserted in a slot defined in each fin 34. The tail of the detent 50 is inserted in the respective helical spring 52 and the frame of the supporting element 51. Each wing of the detent 50 is movably inserted in the slot 35 of each fin 34. Therefore, the first helical spring 52 is compressed between the supporting element 51 and the detent 50.

The tail of the detent 45 is inserted in the second helical spring 52 and a frame attached to or formed on the handle 40. Each wing of the detent 45 is movably inserted in the slot 46 of each leaf 42. Thus, the second helical spring 52 is compressed between the handle 40 and the detent 45.

The toothed wheel 53 is placed between the spacers 54. The spacers 54 are placed between the cams 43. The cams 43 are placed between the fins 34. Each cam 43 contacts the respective fin 34 via the bosses 44 to reduce friction between the cam 43 and the fin 34. The plate 64 is attached to one of the fins 34 by welding or fasteners such as screws or rivets. The axle 41 is inserted in the fins 34, the cams 43, the spacers 54, the toothed wheel 53, and the shell 63. An external end of the coil spring 61 is attached to the shell 63 while an internal end of the coil spring 61 is inserted in the slit 62. The coil spring 61 is loaded previously.

The ferrule 31 is placed around the end 23 of the external tube 20. The tabs 32 are forced toward each other by a fastener 33 such as a screw and rivet. Thus, the positioning unit 30 is retained on the external tube 20.

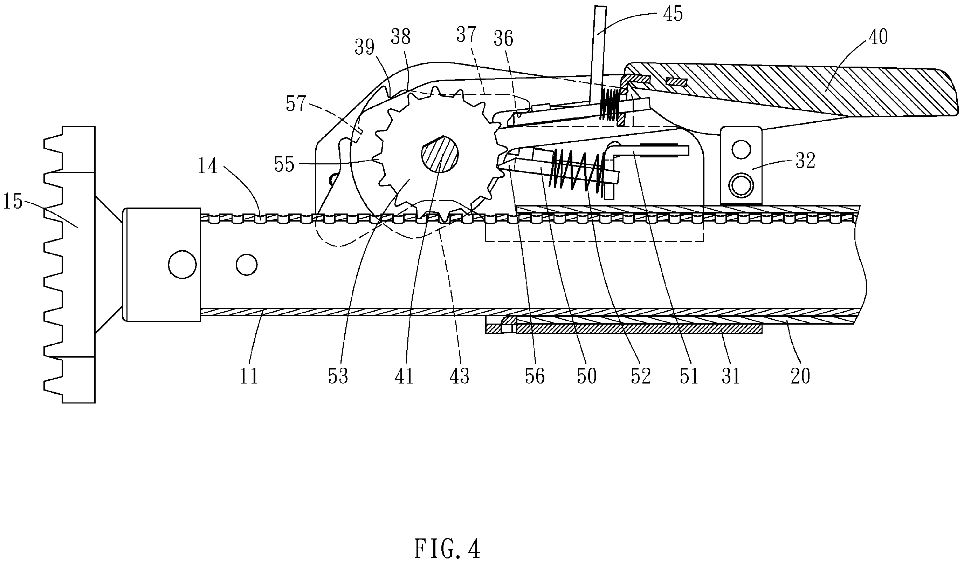

Referring to FIG. 4, each wing of the detent 45 is placed in a recess defined in the first portion 36 of the edge of the respective fin 34 to prevent the handle 40 from pivoting. The tongue 47 is kept away from the toothed wheel 53. The tongue 56 is in contact with the toothed wheel 53. The tongue 56 however allows the toothed wheel 53 to rotate clockwise. Hence, the automatically extensible telescopic apparatus 10 can manually be extended by pulling the internal tube 11 from the external tube 20. This manual extension is however slow and troublesome.

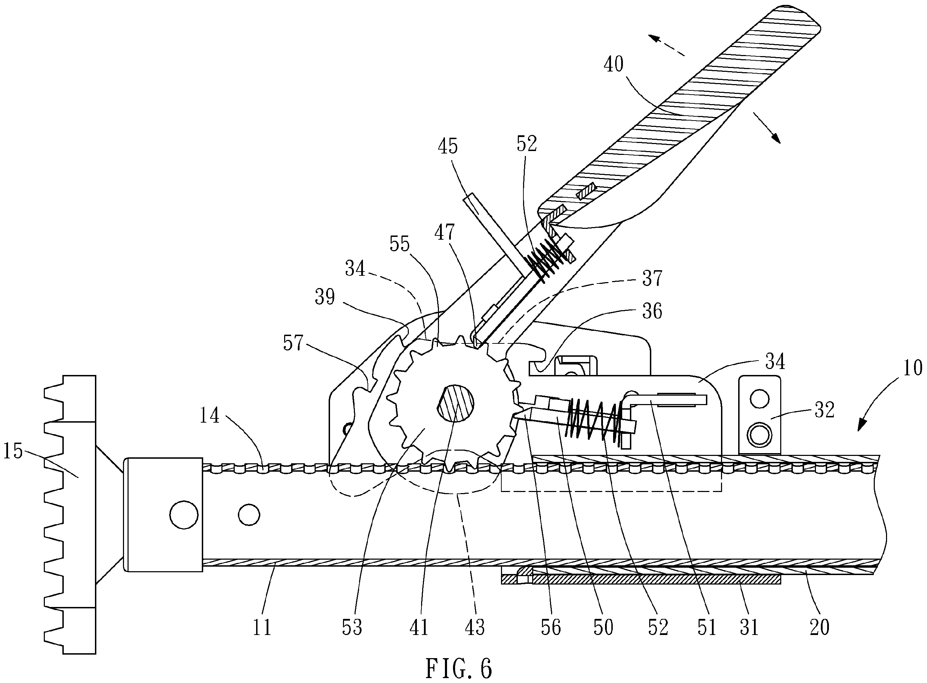

Referring to FIG. 6, each wing of the detent 45 is moved out of the recess defined in the first portion 36 of the edge of the respective fin 34 to allow the handle 40 to pivot. Each wing of the detent 45 is placed on the second portion 37 of the edge of the respective fin 34. The tongues 47 and 56 are both in contact with the toothed wheel 53.

The handle 40 is pivoted in an idle direction as indicated by a phantom arrow head. The tongue 47 rattles on and moves past some of the teeth 55 of the toothed wheel 53. The toothed wheel 53 is not rotated so that the internal tube 11 is not further inserted into the external tube 20.

Then, the handle 40 is pivoted in an active direction as indicated by a solid arrow head. One of the teeth 55 of the toothed wheel 53 is engaged with the tongue 47. Thus, the toothed wheel 53 is rotated by the handle 40 via the second detent 45. Accordingly, the internal tube 11 is extended from the external tube 20.

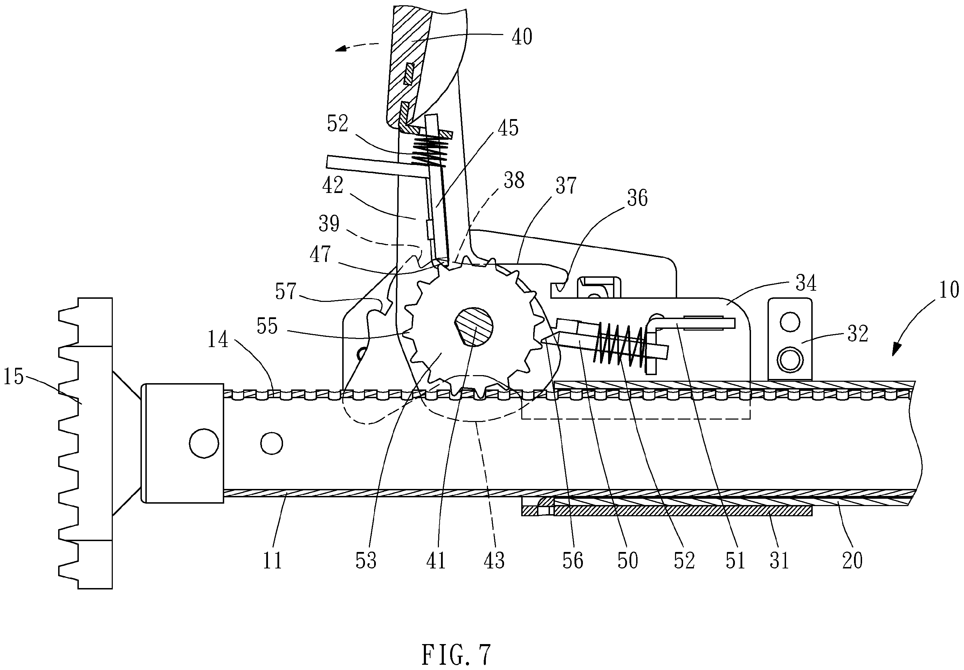

Referring to FIG. 7, each wing of the detent 45 is placed on the third portion 38 of the edge of the respective fin 34 from the second portion 37 of the same. The tongue 56 of the first detent 50 is moved from the toothed wheel 53 by the cams 43, and the tongue 47 of the second detent 40 is moved from the toothed wheel 53 by the fins 34.

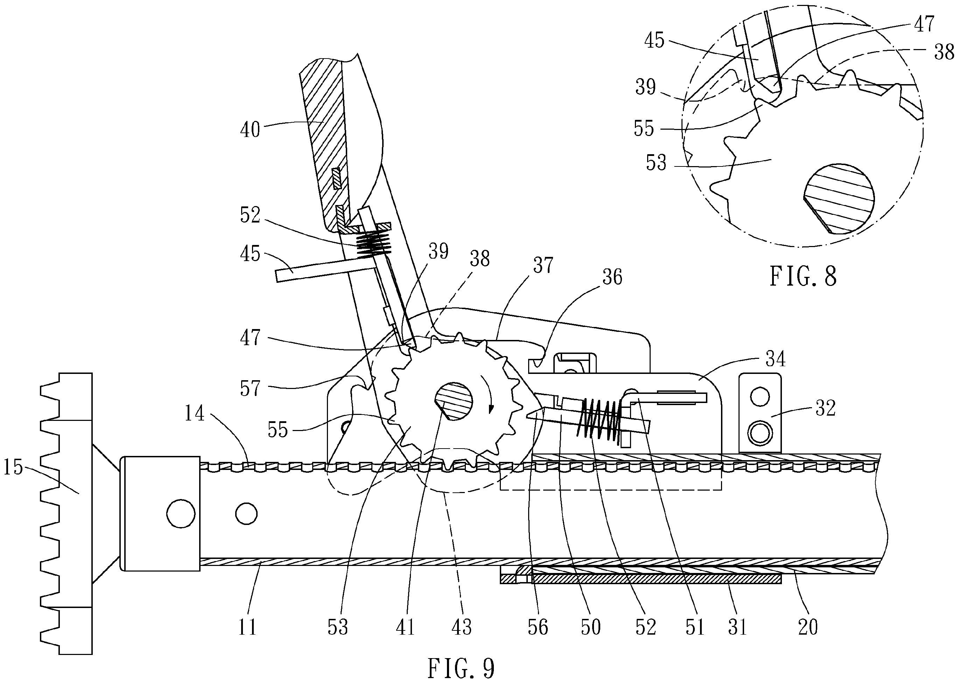

Referring to FIG. 8, each wing of the detent 45 is placed at a peak between the portions 38 and 39 on its way to the fourth portion 39 of the edge of the respective fin 34 from the second portion 37 of the same. At this moment, the tongue 56 of the first detent 50 is disengaged from the toothed wheel 53 by the cams 43 while the tongue 47 of the second detent 45 is disengaged from the toothed wheel 53 by the fins 34. Thus, the toothed wheel 53 is freely rotated by the coil spring 61 via the axle 41. Hence, the internal tube 11 is extended further from the external tube 20 at a fast pace.

Referring to FIG. 9, each wing of the detent 45 is placed on the fourth portion 39 of the edge of the respective fin 34. The tongue 56 is kept away from the toothed wheel 53. The tongue 47 is slightly in contact with the toothed wheel 53. Preferably, about 0.5 to 2.5 mm of the tongue 47 is in contact with the teeth 55. Thus, the second helical spring 52 exerts a small force on the toothed wheel 53 via the tongue 47. Therefore, the toothed wheel 53 is rotated clockwise by the coil spring 61 via the axle 41 with a little resistance from the second helical spring 52 via the tongue 47. Thus, the internal tube 11 is extended further from the external tube 20 at a contained pace. Although contained, this automatic extension is still more convenient than the manual extension.

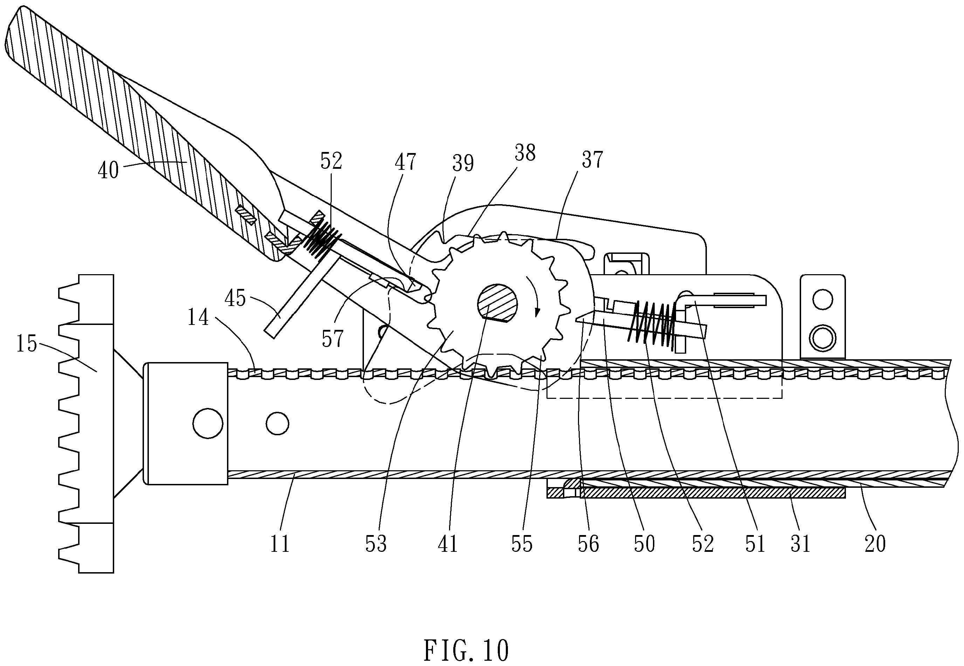

Referring to FIG. 10, each wing of the detent 45 is placed on the fifth portion 57 of the edge of the respective fin 34. The tongues 47 and 56 are both kept away from the toothed wheel 53. Hence, the toothed wheel 53 is freely rotated by the coil spring 61 via the axle 41. Thus, the internal tube 11 is extended further from the external tube 20 at a fast pace before the contact elements 15 contact two objects.

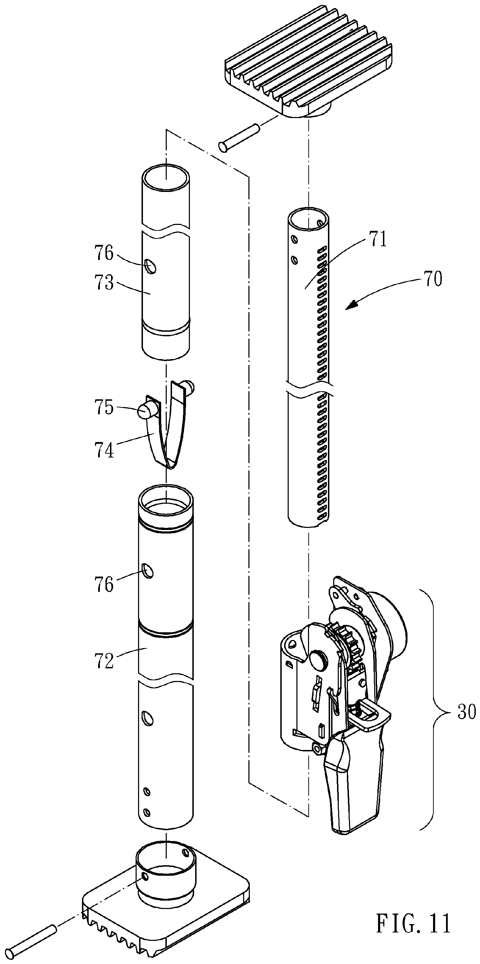

Referring to FIG. 11, there is shown an automatically extensible telescopic apparatus 70 according to a second embodiment of the present invention. The second embodiment is like the first embodiment except including three tubes 71, 72 and 73 instead of the tubes 11 and 20. The tube 71 is inserted in the tube 73 which is inserted in the tube 72. The positioning unit 30 is connected to the tube 72. The tube 72 includes pairs of apertures 76 defined therein. The tube 73 includes a pair of apertures 76 defined therein. An elastic lock includes a V-shaped leaf spring 74 and two bosses 75 each formed at an end of the leaf spring 74. The elastic lock is placed in the tube 73. By the V-shaped leaf spring 74, the pair of bosses 75 is kept in the pair of apertures 76 of the tube 73. The pair of bosses 75 is inserted in a selected pair of apertures 76 of the tube 72 to keep the combination of the tube 72 with the tube 73 at a desired length.

The present invention has been described via the detailed illustration of the embodiments.

## Claims

1. An automatic extensible telescopic apparatus (10) including:
an external tube (20);
an internal tube (11) inserted in the external tube (20) and formed with recesses (14);
a positioning unit (30) including:
a ferrule (31) provided on the external tube (20);
two fins (34) formed on the ferrule (31);
an axle (41) rotationally supported on the fins (34);
a toothed wheel (53) supported on the axle (41) and formed with teeth (55) for insertion in the recesses (14); and
a first detent (50) movably supported on the fins (34) for engagement with the toothed wheel (53);
a handle (40) including:
two leaves (42) placed between the fins (34) and supported on the axle (41); and
a second detent (45) movably supported on the leaves (42) for engagement with the toothed wheel (53);
**characterized in that** the automatic extensible telescopic apparatus further comprises an extending unit (60) connected to the axle (41) so that the extending unit (60) can rotate the toothed wheel (53) via the axle (41), thus extending the internal tube (11) from the external tube (20).

2. The automatic extensible telescopic apparatus (10) according to claim 1, wherein each of the fins (34) includes a first portion (36), a second portion (37), a third portion (38), a fourth portion (39) and a fifth portion (57) sequentially.

3. The automatic extensible telescopic apparatus (10) according to claim 2, wherein a recess is defined in the first portion (36) of each fin (34), so that the handle (40) cannot be pivoted when the second detent (45) is placed on the first portion (36) of the fins (34).

4. The automatic extensible telescopic apparatus (10) according to claim 3, wherein the second detent (45) includes a tongue (47) and the second portion (37) of the fins (34) is configured so that the tongue (47) of the second detent (45) engages with one of the teeth (55) as the handle (40) is pivoted in an active direction and rattles on the teeth (55) as the handle (40) is pivoted in an idle direction when the second detent (45) is placed on the second portion (37) of the fins (34).

5. The automatic extensible telescopic apparatus (10) according to claim 4, wherein the first detent (50) includes a tongue (56) and the handle (40) includes a cam (43) which is configured so that the tongue (56) of the first detent rattles on the teeth (55) as the handle (40) is pivoted in the active direction and engages with one of the teeth (55) as the handle (40) is pivoted in an idle direction when the second detent (45) is placed on the second portion (37) of the fins (34).

6. The automatic extensible telescopic apparatus (10) according to claim 5, wherein the third portion (38) of the fins (34) is formed so that the first detent (50) is moved further from the toothed wheel (53) by the leaves (42) and the second detent (45) is moved further from the toothed wheel (53) when the second detent (45) is moved on the third portion (38) of the fins (34).

7. The automatic extensible telescopic apparatus (10) according to claim 6, wherein the fourth portion (39) of each of the fins (34) is configured so that the first detent (50) is kept away from the toothed wheel (53) by the leaves (42) and the second detent (45) rattles on the toothed wheel (53) that is rotated by the extending unit (60) via the axle (41) to extend the internal tube (11) from the external tube (20) when the second detent (45) is placed on the fourth portion (39) of the fins (34).

8. The automatic extensible telescopic apparatus (10) according to claim 7, wherein a peak is formed between the third and the fourth portion (38, 39) of each fin (34) so that the first detent (50) is disengaged from the toothed wheel (53) by the leaves (42) and the tongue (47) of the second detent (45) is disengaged from the toothed wheel (53) by the fins (34) as the second detent (45) is placed at a peak between the third and fourth portions (38, 39) of the fins (34).

9. The automatic extensible telescopic apparatus (10) according to claim 8, wherein the fifth portion (57) of the fins (34) is configured so that the first and second detents (50, 45) are disengaged from the toothed wheel (53) that is rotated by the extending unit (60) to extend the internal tube (11) from the external tube (20) when the second detent (45) is placed on the fifth portion (57) of the fins (34).

10. The automatic extensible telescopic apparatus (10) according to claim 1, wherein the positioning unit (30) further includes two spacers (54) for sandwiching the toothed wheel (53), wherein the spacers (54) are placed between the leaves (42).

11. The automatic extensible telescopic apparatus (10) according to claim 1, wherein the extending unit (60) includes a coil spring (61) formed with an external end connected to the ferrule (31) and an internal end connected to the axle (41).

12. The automatic extensible telescopic apparatus (10) according to claim 11, wherein the extending unit (60) further includes a shell (63) for containing the coil spring (61), wherein the shell (63) is connected to the ferrule (31).

13. The automatic extensible telescopic apparatus (10) according to claim 12, wherein the extending unit (60) further includes a plate (64) connected to the shell (63), wherein the plate (64) is connected to the ferrule (31).

14. The automatic extensible telescopic apparatus (10) according to claim 13, wherein the plate (64) is connected to one of the fins (34).

15. The automatic extensible telescopic apparatus (10) according to one of the preceding claims further including:
an external tube (72) including apertures (76) defined therein;
an intermediate tube (73) inserted in the external tube (72) and formed with an aperture (76);
an internal tube (71) inserted in the intermediate tube (73) and formed with recesses (14);
an elastic lock including a leaf spring (74) placed in the intermediate tube (73) and a boss (75) extending from the leaf spring (74) into one of the apertures (76) of the external tube (72) via the aperture (76) of the intermediate tube (73).

## Patentansprüche

1. Automatische verlängerbare teleskopische Vorrichtung (10), umfassend:
ein äußeres Rohr (20),
ein inneres Rohr (11), das in das äußere Rohr (20) gesteckt ist und mit Aussparungen (14) ausgebildet ist,
eine Positioniereinheit (30), die umfasst:
eine Hülse (31), die dem äußeren Rohr (20) bereitgestellt ist,
zwei Rippen (34), die an der Hülse (31) ausgebildet sind,
eine Achse (41), die drehbar an den Rippen (34) gelagert ist,
ein Zahnrad (53), das an der Achse (41) gelagert ist und mit Zähnen (55) zum Eingreifen in die Aussparungen (14) ausgebildet und
eine erste Sperre (50), die beweglich an den Rippen (34) zum Eingreifen in das Zahnrad (53) gelagert ist,
einen Griff (40), der beinhaltet:
zwei Blätter (42), die zwischen den Rippen (34) platziert sind und an der Achse (41) angebracht sind, und
eine zweite Sperre (45), die beweglich an den Blättern (42) zum Eingreifen in das Zahnrad (53) gelagert ist,
**dadurch gekennzeichnet, dass**
die automatische verlängerbare teleskopische Vorrichtung im Weiteren ein Ausfahreinheit (60) umfasst, die mit der Achse (41) verbunden ist, so dass das Ausfahreinheit (60) das Zahnrad (53) über die Achse (41) rotieren kann, wodurch sich das innere Rohr (11) von dem äußeren Rohr (20) erstreckt.

2. Automatische verlängerbare teleskopische Vorrichtung (10) nach Anspruch 1, bei welcher jede der Rippen (34) sequentiell einen ersten Abschnitt (36), einen zweiten Abschnitt (37), einen dritten Abschnitt (38), einen vierten Abschnitt (39) und einen fünften Abschnitt (57) umfasst.

3. Automatische verlängerbare teleskopische Vorrichtung (10) nach Anspruch 2, bei welcher in dem ersten Abschnitt (36) jeder Rippe (34) eine Aussparung definiert ist, so dass der Griff (40) nicht geschwenkt werden kann, wenn die zweite Sperre (45) an dem ersten Abschnitt (36) der Rippen angeordnet ist.

4. Automatische verlängerbare teleskopische Vorrichtung (10) nach Anspruch 3, bei welcher die zweite Sperre (45) eine Zunge (47) umfasst und der zweite Abschnitt (37) der Rippen (34) so konfiguriert ist, dass die Zunge (47) der zweiten Sperre (45) in einen der Zähne (55) greift, wenn der Griff (40) in eine aktive Richtung geschwenkt wird, und ratscht über die Zähne (55), wenn der Griff (40) in eine Leerlaufrichtung geschwenkt wird, wenn die zweite Sperre (45) an dem zweiten Abschnitt (37) der Rippen (34) angeordnet ist.

5. Automatische verlängerbare teleskopische Vorrichtung (10) nach Anspruch 4, bei welcher die erste Sperre (50) eine Zunge (56) beinhaltet und der Griff (40) eine Kurvenscheibe (43) beinhaltet, die so konfiguriert ist, dass die Zunge (56) der ersten Sperre über die Zähne (55) ratscht, wenn der Griff (40) in die aktive Richtung geschwenkt wird, und in einen der Zähne (55) greift, wenn der Griff (40) in eine Leerlaufstellung geschwenkt wird, wenn die zweite Sperre (45) an dem zweiten Abschnitt (37) der Rippen (34) angeordnet ist.

6. Automatische verlängerbare teleskopische Vorrichtung (10) nach Anspruch 5, bei welcher der dritte Abschnitte (38) der Rippen (34) so ausgebildet ist, dass die erste Sperre (50) weiter von dem Zahnrad (53) durch die Blätter (42) weg bewegt wird, und die zweite Sperre (45) weiter von dem Zahnrad (53) weg bewegt wird, wenn die zweite Sperre (45) auf den dritten Bereich (38) der Rippen (34) bewegt wird.

7. Automatische verlängerbare teleskopische Vorrichtung (10) nach Anspruch 6, bei welcher der vierte Bereich (39) von jeder der Rippen (34) so konfiguriert ist, dass die erste Sperre (50) von dem Zahnrad (53) durch die Blätter (42) weggehalten wird und die zweite Sperre (45) über das Zahnrad (53) ratscht, das durch die Ausfahreinheit (60) über die Achse (41) rotiert wird, um das innere Rohr (11) aus dem äußeren Rohr (20) auszufahren, wenn die zweite Sperre (45) an dem vierten Bereich (39) der Rippen (34) angeordnet ist.

8. Automatische verlängerbare teleskopische Vorrichtung (10) nach Anspruch 7, bei welcher eine Spitze gebildet ist zwischen dem dritten und dem vierten Abschnitt (38,39) jeder Rippe (34), so dass die erste Sperre (50) von dem Zahnrad (53) durch die Blätter (42) aus dem Eingriff gelöst wird und die Zunge (47) der zweiten Sperre (45) von dem Zahnrad (53) von den Rippen (34) aus dem Eingriff gelöst wird, wenn die zweite Sperre (45) an einer Spitze zwischen den dritten und vierten Abschnitten (38,39) der Rippen (34) angeordnet ist.

9. Automatische verlängerbare teleskopische Vorrichtung (10) nach Anspruch 8, bei welcher der fünfte Abschnitt (57) der Rippen (34) so konfiguriert ist, dass die ersten und zweiten Sperren (50,45) von dem Zahnrad (53) aus dem Eingriff gelöst werden, welches von der Ausfahreinheit (60) rotiert wird, um das innere Rohr (11) aus dem äußeren Rohr (20) zu auszufahren, wenn die zweite Sperre (45) an dem fünften Abschnitt (57) der Rippen (34) angeordnet ist.

10. Automatische verlängerbare teleskopische Vorrichtung (10) nach Anspruch 1, bei welcher die Positioniereinheit (30) im Weiteren zwei Abstandshalter (54), die das Zahnrad (53) zwischen sich aufnehmen, umfasst, wobei die Abstandshalter (54) zwischen den Blättern (42) angeordnet sind.

11. Automatische verlängerbare teleskopische Vorrichtung (10) nach Anspruch 1, bei welcher die Ausfahreinheit (60) eine Spiralfeder (61) umfasst, die mit einem äußeren Ende ausgebildet ist, das mit der Hülse (31) verbunden ist, und einem inneren Ende, das mit der Achse (41) verbunden ist.

12. Automatische verlängerbare teleskopische Vorrichtung (10) nach Anspruch 11, bei weicher die Ausfahreinheit (60) im Weiteren eine Hülle (63) zum Aufnehmen der Spiralfeder (61) umfasst, wobei die Hülle (63) verbunden ist mit der Hülse (31).

13. Automatische verlängerbare teleskopische Vorrichtung (10) nach Anspruch 12, bei welcher die Ausfahreinheit (60) ferner eine Platte (64) umfasst, die mit der Hülle (63) verbunden ist, wobei die Platte (64) mit der Hülse (31) verbunden ist.

14. Automatische verlängerbare teleskopische Vorrichtung (10) nach Anspruch 13, bei welcher die Platte (64) verbunden ist mit einer der Rippen (34).

15. Automatische verlängerbare teleskopische Vorrichtung (10) nach einem der vorausgehenden Ansprüche, die ferner beinhaltet:
ein inneres Rohr (72), das darin definierte Öffnungen (76) umfasst,
ein Zwischenrohr (73), das in des äußere Rohr (72) eingefügt ist und mit einer Öffnung (76) ausgebildet ist,
ein inneres Rohr (71), das in das Zwischenrohr (73) eingefügt ist und mit Aussparungen (14) ausgebildet ist,
eine elastische Verriegelung, die eine Blattfeder (74), die in dem Zwischenrohr (73) angeordnet ist und einen Ansatz (75) beinhaltet, der sich von der Blattfeder (74) in eine der Öffnungen (76) des äußeren Rohrs (72) durch die Öffnung (76) des Zwischenrohrs (73) erstreckt.

## Revendications

1. Appareil télescopique extensible automatique (10) comprenant:
un tube externe (20);
un tube interne (11) inséré dans le tube externe (20) et formé avec des cavités (14);
une unité de positionnement (30) comprenant:
une virole (31) ménagée sur le tube externe (20);
deux ailettes (34) formées sur la virole (31);
un axe (41) supporté à rotation sur les ailettes (34);
une roue dentée (53) supportée sur l'axe (41) et formée avec des dents (55) pour insertion dans les cavités (14); et
un premier arrêt (50) supporté mobile sur les ailettes (34) pour s'engager sur la roue dentée (53);
une poignée (40) comprenant:
deux lamelles (42) placées entre les ailettes (34) et supportées sur l'axe (41); et
un second arrêt (45) supporté mobile sur les lamelles (42) pour s'engager sur la roue dentée (53);
**caractérisé en ce que**
l'appareil télescopique extensible automatique comprend en outre une unité d'extension (60) raccordée à l'axe (41) de sorte que l'unité d'extension (60) puisse faire tourner la roue dentée (53) via l'axe (41), désengageant de la sorte le tube interne (11) du tube externe (20).

2. Appareil télescopique extensible automatique (10) selon la revendication 1, dans lequel chacune des ailettes (34) comprend une première partie (36), une deuxième partie (37), une troisième partie (38), une quatrième partie (39) et une cinquième partie (57) en séquence.

3. Appareil télescopique extensible automatique (10) selon la revendication 2, dans lequel une cavité est définie dans la première partie (36) de chaque ailette (34) de sorte que la poignée (40) ne puisse pivoter lorsque le second arrêt (45) est placé sur la première partie (36) des ailettes (34).

4. Appareil télescopique extensible automatique (10) selon la revendication 3, dans lequel le second arrêt (45) comprend une languette (47) et la seconde partie (37) des ailettes (34) est configurée de sorte que la languette (47) du second arrêt (45) s'engage sur l'une des dents (55) lorsque la poignée (40) est soumise à un pivotement dans une direction active et cliquette sur les dents (55) lorsque la poignée (40) est soumise à un pivotement dans une direction à vide lorsque le second arrêt (45) est placé sur la seconde partie (37) des ailettes (34).

5. Appareil télescopique extensible automatique (10) selon la revendication 4, dans lequel le premier arrêt (50) comprend une languette (56) et la poignée (40) comprend une came (43) qui est configurée de sorte que la languette (56) du premier arrêt cliquette sur les dents (55) lorsque la poignée (40) est soumise à un pivotement dans la direction active et s'engage sur l'une des dents (55) lorsque la poignée (40) est soumise à un pivotement dans une direction à vide lorsque le second arrêt (45) est placé sur la seconde partie (37) des ailettes (34).

6. Appareil télescopique extensible automatique (10) selon la revendication 5, dans lequel la troisième partie (38) des ailettes (34) est formée de sorte que le premier arrêt (50) soit déplacé plus loin de la roue dentée (53) par les lamelles (42) et que le second arrêt (45) soit déplacé plus loin de la roue dentée (53) lorsque le second arrêt (45) est déplacé sur la troisième partie (38) des ailettes (34).

7. Appareil télescopique extensible automatique (10) selon la revendication 6, dans lequel la quatrième partie (39) de chacune des ailettes (34) est configurée de sorte que le premier arrêt (50) soit maintenu écarté de la roue dentée (53) par les lamelles (42) et que le second arrêt (45) cliquette sur la roue dentée (53) qui est soumise à une rotation par l'unité d'extension (60) via l'axe (41) pour désengager le tube interne (11) du tube externe (20) lorsque le second arrêt (45) est placé sur la quatrième partie (39) des ailettes (34).

8. Appareil télescopique extensible automatique (10) selon la revendication 7, dans lequel un pic est formé entre les troisième et quatrième parties (38, 39) de chaque ailette (34) de sorte que le premier arrêt (50) soit désengagé de la roue dentée (53) par les lamelles (42) et que la languette (47) du second arrêt (45) soit désengagée de la roue dentée (53) par les ailettes (34) lorsque le second arrêt (45) est placé sur un pic entre les troisième et quatrième parties (38, 39) des ailettes (34).

9. Appareil télescopique extensible automatique (10) selon la revendication 8, dans lequel la cinquième partie (57) des ailettes (34) est configurée de sorte que les premier et second arrêts (50, 45) soient désengagés de la roue dentée (53) qui est soumise à une rotation par l'unité d'extension (60) pour désengager le tube interne (11) du tube externe (20) lorsque le second arrêt (45) est placé sur la cinquième partie (57) des ailettes (34).

10. Appareil télescopique extensible automatique (10) selon la revendication 1, dans lequel l'unité de positionnement (30) comprend en outre deux espaceurs (54) pour prendre en sandwich la roue dentée (53), dans lequel les espaceurs (54) sont placés entre les lamelles (42).

11. Appareil télescopique extensible automatique (10) selon la revendication 1, dans lequel l'unité d'extension (60) comprend un ressort hélicoïdal (61) formé avec une extrémité externe raccordée à la virole (31) et une extrémité interne raccordée à l'axe (41).

12. Appareil télescopique extensible automatique (10) selon la revendication 11, dans lequel l'unité d'extension (60) comprend en outre une coque (63) pour contenir le ressort hélicoïdal (61), dans lequel la coque (63) est raccordée à la virole (31).

13. Appareil télescopique extensible automatique (10) selon la revendication 12, dans lequel l'unité d'extension (60) comprend en outre une plaque (64) raccordée à la coque (63), dans lequel la plaque (64) est raccordée à la virole (31).

14. Appareil télescopique extensible automatique (10) selon la revendication 13, dans lequel la plaque (64) est raccordée à l'une des ailettes (34).

15. Appareil télescopique extensible automatique (10) selon l'une quelconque des revendications précédentes, comprenant en outre:
un tube externe (72) comprenant des ouvertures (76) qui y sont définies;
un tube intermédiaire (73) inséré dans le tube externe (72) et formé avec une ouverture (76);
un tube interne (71) inséré dans le tube intermédiaire (73) et formé avec des cavités (14);
un verrou élastique comprenant un ressort à lames (74) placé dans le tube intermédiaire (73) et un bossage (75) s'étendant du ressort à lames (74) dans l'une des ouvertures (76) du tube externe (72) via l'ouverture (76) du tube intermédiaire (73).
